# EUROPÄISCHE PATENTSCHRIFT

(11) **EP 1 759 339 B1**
(45) Veröffentlichungstag und Bekanntmachung des Hinweises auf die Patenterteilung: **04.05.2016**
(21) Anmeldenummer: 05751648.6
(22) Anmeldetag: 07.06.2005
(51) Int. Cl.: G06K 19/077, B29C 45/14

(54) **VERFAHREN ZUR HERSTELLUNG EINES TRAGBAREN DATENTRÄGERS**
METHOD FOR PRODUCING A PORTABLE DATA CARRIER
PROCEDE DE FABRICATION D'UN SUPPORT DE DONNEES PORTABLE

(30) Priorität: 09.06.2004 DE 102004028218
(43) Veröffentlichungstag der Anmeldung: 07.03.2007
(73) Patentinhaber: Giesecke & Devrient GmbH, 81677 München (DE)
(72) Erfinder: WASCHK, Volker, 83032 Grünwald (DE)
(86) Internationale Anmeldenummer: PCT/EP2005/006104
(87) Internationale Veröffentlichungsnummer: WO 2005/122072

(56) Entgegenhaltungen:
- EP-A- 1 104 910
- EP-A1- 0 340 100
- EP-A1- 0 923 047
- DE-A1- 19 908 285
- US-A- 4 709 254
- US-B1- 6 575 375

## Beschreibung

Die Erfindung betrifft die Herstellung von tragbaren Datenträgern sowie entsprechende Datenträger. Besonders betrifft die Erfindung die Herstellung von Chipkarten mit Außenabmessungen, die noch unter den normierten Standardabmessungen üblicher SIM-Karten liegen.

Ein Verfahren nach der Gattung des Hauptanspruchs ist aus der DE 30 29 667 A1 bekannt. Darin ist die Herstellung eines IC-Modules für Chipkarten unter Nutzung der Spritzgußtechnik beschrieben. Verfahrensgemäß wird auf einen Trägerfilm, der an seiner Oberseite ein Kontaktlayout aufweist und an dessen Unterseite zu dem Kontaktlayout korrespondierende Kontaktierungsflächen ausgebildet sind, ein Halbleiterschaltkreis angeordnet und an die Kontaktierungsflächen angeschlossen. Der Halbleiterschaltkreis wird danach in einem Spritzgießwerkzeug mit einem Gußkörper umgossen. Der Gußkörper wird anschließend aus dem Trägerfilm ausgestanzt und bildet ein IC-Modul, das nachfolgend in eine Chipkarte eingebaut werden kann. Das bekannte Verfahren beruht auf dem Konzept, zur Herstellung einer Chipkarte zunächst ein Chipmodul herzustellen und dieses anschließend in einen vorbereiteten Kartenkörper einzubauen.

Dieses Konzept bildet das übliche Verfahren zur Herstellung von Chipkarten und ist gut beschrieben, unter anderem in dem Buch "Vom Plastik zur Chipkarte" von Y. Haghiri und T. Tarantino, Hanser-Verlag München, 1999. Zur Herstellung von Kartenkörpern für Chipkarten ist in dem Buch unter anderem die Spritzgießtechnik detailliert erläutert. Unter der Bezeichnung "In-mold -Technik" ist dabei ein Spritzgießverfahren beschrieben, bei dem ein beweglicher Stempel, an dessen Kopfseite ein zuvor hergestelltes Chipmodul befestigt ist, so in einer Gießform plaziert wird, daß das Chipmodul in die von den Gießformhälften umschlossene Hohlform hineinragt. Die Hohlform mit Chipmodul wird anschließend durch Einspritzen von Vergußmasse über einen seitlich angeordneten Einspritzkanal ausgefüllt. Es entsteht ein Spritzgußkartenkörper mit eingebettetem Chipmodul.

Aus der US 6,575,375 B1 ist weiter ein Verfahren zur Herstellung von besonders kleinen SIM-Modulen durch Anwendung einer Spritzgußtechnik bekannt. Danach wird eine Mehrzahl von in Matrixanordnung auf einem Trägerfilm plazierten Chipmodulen in ein Spritzgießwerkzeug gebracht und zu einem Riegel mit mehreren Chipmodulen aufgegossen. Die in dem Riegel enthaltenen Chipmodule werden anschließend so ausgeschnitten, daß ein Datenträger in einer gewünschten Form entsteht. Das Verfahren kombiniert die günstige Spritzgußherstellung mit einer großen Freiheit in der Formgebung für die herzustellenden Datenträger. Es erfordert allerdings den Umgang mit einem bei der Herstellung von vergleichbaren Datenträgern unüblichen Zwischenerzeugnis und bedingt eine entsprechende Anpassung der eingesetzten Maschinen und Werkzeuge.

Aus der EP 1104 910 A1 ist ein Verfahren zur Herstellung einer Chipkarte im SIM-Format ID-000 bekannt, bei dem das Gehäuse in einem Moldverfahren einstückig um den Halbleiterchip herum erzeugt wird, wobei der Halbleiterchip auf einem Trägerband plaziert ist. Das Trägerband weist Fenster auf. Das die Fenster ausfüllende Gußmaterial wird Teil der Oberfläche der fertigen Karten. Um die Handhabung der hergestellten SIM-Karten zu erleichtern, sollen diese in einen Träger im Format einer Standard ID1-Karte eingesetzt werden, der hierzu mit einer Kavität versehen ist.

In Anbetracht einer zunehmenden Miniaturisierung von elektronischen Endgeräten wird bei ETSI (European Telecom Communications Standards Institute) gegenwärtig die Einführung eines neuen, nachfolgend als "Mini-Plug-In" bezeichnten Standards für Chipkarten diskutiert, der gegenüber dem Standard für SIM-Karten weiter verkleinerte Abmessungen aufweist.

Aufgabe der Erfindung ist es, die Herstellung von einstückig im Spritzgießverfahren hergestellten tragbaren Datenträgern mit sehr kleinen Abmessungen zu vereinfachen.

Diese Aufgabe wird gelöst durch ein Verfahren mit den Merkmalen des Hauptanspruchs 1. Das erfindungsgemäße Verfahren hat den Vorteil, daß sehr kleine tragbare Datenträger ohne den Zwischenschritt einer separaten Modulherstellung erhalten werden. Die Herstellung erfordert weder ein Fräsen einer Modulkavität noch einen Laminiervorgang zum Verbinden eines Modules mit einem Kartenkörper noch die Ausführung eines "Embedding"-Prozesses in einer Implantierungsvorrichtung. Entsprechende Maschinen entfallen und gestalten die Herstellung kostengünstig. Vorteilhaft kann das erfindungsgemäße Verfahren basierend auf der bekannten "Inmold"-Technik realisiert werden. Daß die fertigen Datenträger unmittelbar auf dem Filmträger hergestellt werden erleichtert ihre weitere Handhabung. Insbesondere können die Datenträger noch auf dem Filmträger kodiert und beschriftet werden. Die Kodierung kann mit einem üblichen Chip-Funktionstester erfolgen. Die fertigen Datenträger können auch in der Rolle an einen Abnehmer übergeben werden, der dann den Vereinzelungsschritt ausführt. Das erfindungsgemäße Verfahren eignet sich bevorzugt zur Herstellung von tragbaren Datenträgern mit einer Außenkontur gemäß einer Standardspezifikation für die Außenmaße von tragbaren Datenträgern. Insbesondere eignet es sich zur Herstellung von Datenträgern gemäß dem gegenwärtig diskutiertem Mini-Plug-In-Standard für Chipkarten.

Ein verfahrensgemäß hergestellter tragbarer Datenträger zeichnet sich durch eine besondere Strukturfestigkeit aus, da der Halbleiterschaltkreis unmittelbar in den Körper des tragbaren Datenträgers eingebettet ist. Damit entfällt das Problem der Festigkeit der Verbindung zwischen zwei separaten Bauelementen und entsprechend die Möglichkeit des Brechens einer solchen Verbindung.

Unter Bezugnahme auf die Zeichnung wird ein Ausführungsbeispiel für das erfindungsgemäße Verfahren nachfolgend näher erläutert.

Es zeigen:
- Fig.1: eine Aufsicht auf einen Filmträger mit darauf ausgebildeten Kontaktlayouts von der Oberseite,
- Fig. 2: einen Längsschnitt durch den in Fig. 1 gezeigten Filmträger,
- Fig. 3: einen in ein Spritzgießwerkzeug eingebrachten Abschnitt eines Filmträgers mit Kontaktlayout und Halbleiterbaustein im Längsschnitt,
- Fig. 4: einen auf einem Filmträger ausgebildeten Gußkörper und
- Fig. 5: einen tragbaren Datenträger in Aufsicht von der Kontaktlayoutseite.

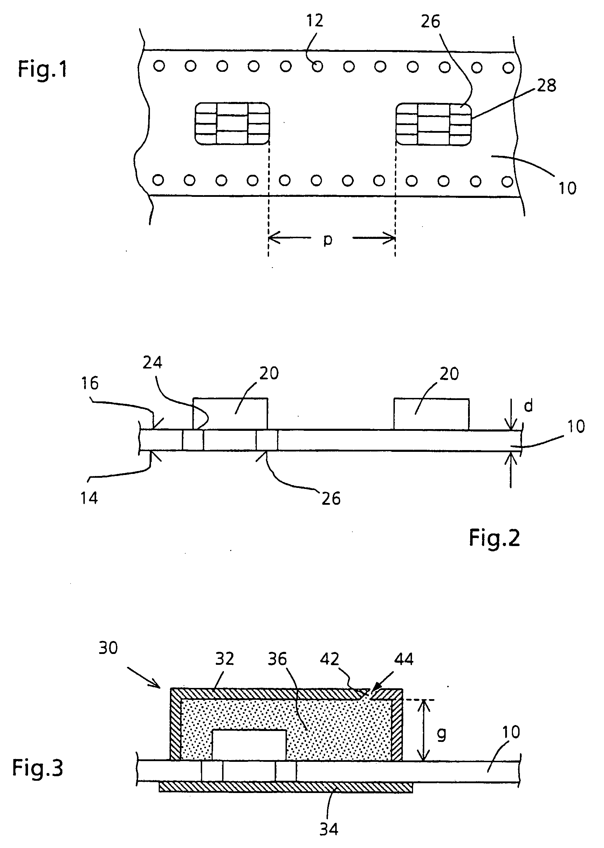

Ausgangsmaterial für das erfindungsgemäße Herstellungsverfahren bildet ein Filmträger 10 aus einem rollbaren Trägermaterial auf Kunststoffbasis, der an den Seiten Perforationen 12 zur Unterstützung des Transports bei der Verarbeitung aufweist. Der Filmträger 10 besitzt eine Dicke d; das Material für den Filmträger 10 ist so gewählt, daß es einerseits eine gute Verbindung mit einer aufspritzbaren Vergußmasse eingeht und andererseits die Qualitäten einer Deckschicht eines fertigen tragbaren Datenträgers besitzt. An der Oberseite des Filmträgers 10 sind, wie in Fig. 1 gezeigt, Kontaktlayouts 28 mit einer Mehrzahl von einzelnen Kontaktflächen 26 ausgebildet. Das Kontaktlayout 28 entspricht einem Normlayout für Chipkarten gemäß ISO 7816. An der Unterseite 16 des Filmträgers 10 sind zu den Kontaktflächen 26 des Kontaktlayouts 28 korrespondierende Kontaktierungsflächen 24 zum Anschluß eines Hälbleiterschaltkreises 20 ausgebildet, die mit den Kontaktflächen 26 über geeignete Durchkontaktierungen verbunden sind. Bei Verarbeitung von der Rolle befindet sich auf einem Filmträger 10 eine Vielzahl von Kontaktlayouts 28, die in einem Abstand p angeordnet sind. Das Verfahren ist aber gleichermaßen durchführbar mit Filmträgern 10, auf denen jeweils genau ein Kontaktlayout 28 ausgebildet ist.

An der Unterseite des Filmträgers 10 ist jeweils ein Halbleiterschaltkreis 20 angeordnet und elektrisch mit den Kontaktierungsflächen 24 verbunden. Bei dem Halbleiterschaltkreis 20 handelt es sich um einen für Chipkarten typischen "Chip", d.h. um einen durch Prozessierung eines Wafers erzeugten integrierten Schaltkreis, der in der Regel alle Merkmale eines Computers aufweist. Herstellung des Chips ebenso wie die Vorbereitung des Filmträgers 10 durch Aufbringen von Kontaktlayout, Kontaktierungsflächen und Chip sind in der Fachwelt bekannt und unter anderem in dem oben bezeichneten Buch "Vom Plastik zur Chipkarte" oder auch in dem Buch "Handbuch der Chipkarten" von W. Rankl, W. Effing, Hanser Verlag, 4. Auflage, ausführlich beschrieben. Für Details zur Durchführung der Bearbeitungsschritte wie zu Aufbau und Funktion des integrierten Schaltkreises wird deshalb auf die einschlägige Literatur, insbesondere die genannten Bücher, verwiesen.

Der mit dem Halbleiterschaltkreis 20 versehene Filmträger 10, wie er in Fig. 2 dargestellt ist, wird nachfolgend in einem Spritzgießprozeß weiterverarbeitet. Hierzu wird der Filmträger 10 mit dem Halbleiterschaltkreis 40, wie in Fig. 3 veranschaulicht, in die Kavität 36 eines Spritzgießwerkzeuges 30 eingebracht. Damit der Spritzgießprozeß in der Rolle ausgeführt werden kann, ist der Abstand p zwischen zwei aufeinanderfolgenden Halbleiterschaltkreisen 20 auf dem Filmträger 10 zumindest größer als die Längserstreckung der Dichtkante des Spritzgießwerkzeuges 30 über dem Filmträger 10.

Das Spritzgießwerkzeug 30 besteht aus zwei Gießformhälften 32,34, wobei die untere Gießformhälfte 34 an der Oberseite 14 des Filmträgers 10 mit dem Kontaktlayout 28 anliegt und als Unterlage dient. Die obere Gießformhälfte 32 liegt dicht auf der Unterseite 12 des Filmträgers 10 auf und umschließt unter Belassen einer Kavität 36 den Halbleiterschaltkreis 20 mit Kontaktierungsflächen 24 und ggf. vorhandenen weiteren Kontaktierungsstrukturen, etwa in Form von Bonddrähten. In der oberen Gießformhälfte 32 befindet sich, in bekannter Weise, an geeigneter Stelle weiter ein Einspritzkanal 42, durch den Vergußmasse 44 in die Kavität 36 eingespritzt werden kann.

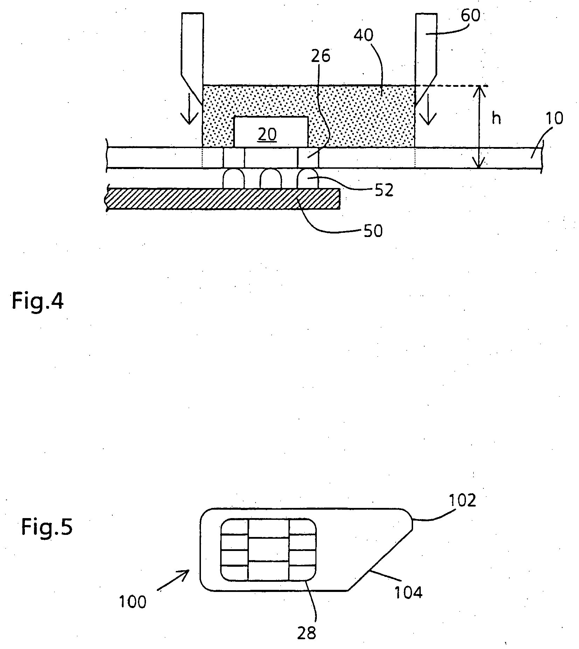

Die von der oberen Gießformhälfte 32 umschlossene Kavität 36 besitzt die für den fertigen tragbaren Datenträger angestrebte äußere Endform, ggf. korrigiert um einen Höhenabzug für die Dicke d des Filmtägers 10. Bei der Endform kann es sich insbesondere um eine Geometrie mit den - noch zu definierenden - Standardabmessungen handeln, wie sie gegenwärtig von ETSI als neues Mini-Plug-In-Format diskutiert wird; Fig. 5 veranschaulicht eine mögliche äußere Form eines solchen tragbaren Datenträgers 100 in Aufsicht. Die Gießformhälften 32, 34 sind in Bezug auf das Kontaktlayout 28 so plaziert, daß das Kontaktlayout 28 im fertigen tragbaren Datenträger 100 genau an der Position legt, die aufgrund der anzuwendenden Norm vorgegebenen ist. Die Innenhöhe g der Kavität 36 entspricht der für den fertigen Datenträger 100 angestrebten Endhöhe h, vermindert um die Dicke d des Filmträgers 10.

Im Gußschritt selbst wird durch den Einspritzkanal 42 Vergußmasse in die Kavität 36 eingeleitet und diese vollständig aufgefüllt. Anschließend werden die Gießformhälften 32, 34 entfernt. Auf dem Filmträger 10 entsteht danach ein Gußkörper 40 mit der Außenkontur des fertigen Datenträgers 100.

Der so bereits weitgehend fertiggestellte tragbare Datenträger 100 wird anschließend individualisiert. Hierzu wird der Gußkörper 40 mit darin eingebettetem Halbleiterschaltkreis 20 an eine Test- und Personalisierungseinrichtung 50 gebracht. Diese verfügt insbesondere über eine Lese/ Schreibeinrichtung 52 mit Kontaktstiften, welche auf die Kontaktflächen 26 stößen, um eine Datenverbindung zu dem auf der gegenüberliegenden Seite 16 des Filmträgers 10 angeordneten Halbleiterschaltkreis 20 herzustellen. Über diese Datenverbindung wird der Halbleiterschaltkreis 20 sodann in üblicher Weise getestet und anschließend mit individualisierenden Daten versehen, indem z.B. eine Seriennummer eingeschrieben wird.

Der getestete und individualisierte tragbare Datenträger 100 wird nachfolgend einer Beschriftungsstation zugeführt, wo er z.B. mittels eines Lasers oder durch Bedrucken mit einem Inkjet-Drucker beschriftet oder mit grafischen Elementen versehen wird.

Die Schritte der datenmäßigen Individualisierung und der nachfolgenden Beschriftung erfolgen zweckmäßig in der Rolle, d.h. während die Gußkörper 40 noch mit dem Filmträger 10 verbunden sind. Die Perforationen 12 ermöglichen dabei eine einfache Bewegung des Filmträgers 10.

Der individualisierte Datenträger 100 wird sodann vereinzelt. Mittels eines geeigneten Werkzeuges 60, z.B. einem Stanzwerkzeug, werden dabei die außerhalb des Gußkörpers 40 liegenden Teile des Filmträgers 10 entfernt. Der mit dem Gußkörper 40 verbundene Teil des Filmträgers 10 verbleibt auf dem Gußkörper 40 und wird zur Deckschicht des fertigen tragbaren Datenträgers 100. Alternativ zum Stanzen kann das Entfernen des Filmträgers 10 auch durch Schneiden, durch Einsatz eines Lasers oder durch ein chemisches Vereinzeln erfolgen.

Der Vereinzelungsschritt kann auch zu einem früheren Zeitpunkt erfolgen, d.h. vor dem Beschriften oder vor dem Individualisieren in der Personalisierungseinrichtung. Die Durchführung der weiteren Bearbeitungsschritte kann dann z.B. im "Tray", d.h. in einer Art Tablett mit Vertiefungen, worin einzeln die Datenträger 100 liegen, durchgeführt werden.

Nach dem Vereinzeln liegt unmittelbar ein fertiger tragbarer Datenträger 100 vor, wie er in Fig. 5 in einer Aufsicht angedeutet ist. Die Außenkontur 102 weist typische, durch die jeweils anzuwendende einschlägige Norm vorgegebene geometrische Merkmale auf wie etwa eine abgeschnittene Ecke 104. Die Deckschicht des tragbaren Datenträgers 100 mit dem Kontaktlayout 28 wird von dem Material des Filmträgers 10 gebildet.

Der vereinzelte tragbare Datenträger 100 kann anschließend, sofern dies erforderlich ist, weiteren Bearbeitungsschritten unterworfen werden. Beispielsweise kann vorgesehen sein, daß nach der Vereinzelung des tragbaren Datenträgers 100 eine abschließende Personalisierung erfolgt und der trägbare Datenträger 100 hierzu erneut einer Personalisierungseinrichtung 50 zugeführt wird.

Das vorgeschlagene Verfahren ist besonders geeignet, wenn das Kontaktlayout 28 eines herzustellenden tragbaren Datenträgers 100 eine ähnliche Größe besitzt wie die Grundfläche des tragbaren Datenträgers 100 selbst, so daß bei Anwendung der üblichen Moduleinbautechnik zur Herstellung des Datenträgers zwischen Kontaktlayout 28 und Außenkontur 102 nur eine Wand mit einer mechanisch wenig stabilen Restwandstärke verbleiben würde. Das Verfahren eignet sich daneben als Alternative aber auch dann, wenn grundsätzlich die Nutzung der bekannten Moduleinbautechnik anwendbar wäre.

Die vorstehend beschriebenen Ausführungsbeispiele gestatten unter Beibehaltung der grundlegenden erfinderischen Idee weitere Ausführungsvarianten. So kann das Gießwerkzeug 30 mehr als zwei Teile aufweisen oder es können an einem Filmträger gleichzeitig mehrere Spritzgießwerkzeuge 30 eingesetzt werden. Noch in der Rolle können ferner zusätzliche Bearbeitungsschritte an dem zu erstellenden Datenträger ausgeführt werden. Beispielsweise können eine mechanische Nachbearbeitung des Gußkörpers 40 erfolgen oder mechanische Belastungsprüfungen vorgenommen werden. Um eine Vereinzelung der Datenträger bei einem Abnehmer zu unterstützen, dem die Datenträger dann in der Rolle übergeben werden, können Maßnahmen zur Vorbereitung der Vereinzelung vorgesehen werden, etwa durch Anlegen von Sollbruchlinien entlang der Außenkontur der Datenträger.

## Patentansprüche

1. Verfahren zur Herstellung eines tragbaren Datenträgers mit den Schritten
- Bereitstellen eines Filmträgers (10), an dessen Oberseite (14) ein Kontaktlayout (28) und an dessen Unterseite (16) Kontaktierungsflächen (24) angelegt wurden,
- Anordnung eines Halbleiterschaltkreises (20) auf der Unterseite (16) und Verbinden der Kontakte des Halbleiterschaltkreises (20) mit den Kontaktierungsflächen (24),
- Ausführen eines Spritzgießprozesses, in dem auf der Unterseite (16) um den Halbleiterschaltkreis (20) herum ein Gußkörper (40) ausgebildet wird, der eine einer Standardspezifikation für die Außenmaße eines tragbaren Datenträgers entsprechende Außenkontur (102) aufweist, wobei für den Spritzgießprozess ein Gießwerkzeug (30) verwendet wird, das eine auf dem Filmträger (10) aufsetzende obere Gießformhälfte (32) aufweist, die eine Kavität (36) umschließt, deren Innenhöhe (g) der für den fertigen Datenträger (100) angestrebten Endhöhe (h), vermindert um die Dicke (d) des Filmträgers entspricht, und ferner die weiteren Schritte ausgeführt werden:
- Zuführen des Filmträgers (10) mit dem darauf befindlichen Halbleiterschaltkreis (20) zu einer Personalisierungseinrichtung (50), wo eine Individualisierung des Halbleiterschaltkreises (20) erfolgt, und
- danach Verzeinzeln des tragbaren Datenträger (100), indem der mit dem Gußkörper (40) verbundene Teil des Filmträgers (10) von dem restlichen Filmträger (10) getrennt wird, wobei der mit dem Gußkörper (40) verbundene Teil des Filmträgers die Deckschicht des fertigen tragbaren Datenträgers bildet.

2. Verfahren nach Anspruch 1, wobei der Filmträger (10) mit dem darauf angeordneten Halbleiterschaltkreis (20) nach Herstellen des Gußkörpers (40) einer Beschriftungsstation zugeführt wird, wo eine Beschriftung des Gußkörpers (40) und/oder des mit dem Gußkörper (40) verbundenen Teil des Filmträgers (10) mit grafischen und/oder alphanumerischen Zeichen erfolgt.

3. Verfahren nach Anspruch 1, **dadurch gekennzeichnet, dass** der Filmträger (10) rollbar ist und eine Transportperforierung (12) aufweist.

## Claims

1. A method for producing a portable data carrier having the steps of
- supplying a film carrier (10) having a contact layout (28) arranged on its upper side (14) and contacting surfaces (24) arranged on its underside (16),
- disposing a semiconductor circuit (20) on the underside (16) and connecting the contacts of the semiconductor circuit (20) to the contacting surfaces (24),
- performing an injection molding process in which there is formed on the underside (16) around the semiconductor circuit (20) a molded body (40) having an outer contour (102) corresponding to a standard specification for the outer dimensions of a portable data carrier, wherein
- for the injection molding process there is used a casting tool (30) which has an upper mold half (32) being placed on the film carrier (10) and enclosing a cavity (36) whose inside height (g) corresponds to the final height (h) desired for the finished data carrier (100) reduced by the thickness (d) of the film carrier, and the further steps also being performed:.
- feeding the film carrier (10) with the semiconductor circuit (20) located thereon to a personalization device (50) where an individualization of the semiconductor circuit (20) is effected, and
- thereafter singling the portable data carrier (100) by separating the part of the film carrier (10) connected to the molded body (40) from the remaining film carrier (10), with the part of the film carrier connected to the molded body (40) forming the cover layer of the finished data carrier.

2. The method according to claim 1, wherein the film carrier (10) with the semiconductor circuit (20) disposed thereon is fed, after production of the molded body (40), to an inscription station where the molded body (40) and/or the part of the film carrier (10) connected to the molded body (40) is inscribed with graphic and/or alphanumeric characters.

3. The method according to claim 1, **characterized in that** the film carrier (10) is rollable and has a transport perforation (12).

## Revendications

1. Procédé de fabrication d'un support de données portable, comprenant les étapes
- mise à disposition d'un support de film (10) à la face de dessus (14) duquel un layout de contact (28) et à la face de dessous (16) duquel des surfaces de mise en contact (24) ont été aménagées,
- agencement d'un circuit à semi-conducteur (20) à la face de dessous (16) et raccordement des contacts du circuit à semi-conducteur (20) avec les surfaces de mise en contact (24),
- exécution d'un processus de moulage par injection dans lequel, à la face de dessous (16), autour du circuit à semi-conducteur (20), un corps moulé (40) est réalisé, lequel présente un contour extérieur (102) correspondant à une spécification standard pour les dimensions extérieures d'un support de données portable, cependant que
pour le processus de moulage par injection, un outil de moulage (30) est utilisé, lequel comporte un demi-moule (32) de dessus reposant sur le support de film (10) et entourant une cavité (36) dont la hauteur intérieure (g) correspond à la hauteur finale (h) recherchée pour le support de données portable fini (100), moins l'épaisseur (d) du support de film, et que, en outre, sont exécutées les étapes supplémentaires:
- acheminement du support de film (10) y compris le circuit à semi-conducteur (20) se trouvant dessus vers un dispositif de personnalisation (50), où une individualisation du circuit à semi-conducteur (20) a lieu, et
- ensuite isolation du support de données portable (100), ce qui a lieu en ce que la partie du support de film (10) jointe au corps moulé (40) est séparée du reste du support de film (10), la partie du support de film jointe au corps moulé (40) formant la couche de recouvrement du support de données portable fini.

2. Procédé selon la revendication 1, le support de film (10) y compris le circuit à semi-conducteur (20) agencé dessus étant, après fabrication du corps moulé (40), acheminé vers une station de marquage où un marquage du corps moulé (40) et/ou de la partie du support de film (10) jointe au corps moulé (40) avec des caractères graphiques et/ou alphanumériques a lieu.

3. Procédé selon la revendication 1, **caractérisé en ce que** le support de film (10) peut être roulé et comporte une perforation pour le transport (12).
